**Europäisches Patentamt**

**European Patent Office**

**Office européen des brevets**

(19)

(11) Veröffentlichungsnummer : **0 366 683 B1**

(12) # EUROPÄISCHE PATENTSCHRIFT

(45) Veröffentlichungstag der Patentschrift :
**01.04.92 Patentblatt 92/14**

(51) Int. Cl.$^5$ : **A21B 1/24**

(21) Anmeldenummer : **88905571.1**

(22) Anmeldetag : **22.06.88**

(86) Internationale Anmeldenummer :
**PCT/AT88/00047**

(87) Internationale Veröffentlichungsnummer :
**WO 89/00381 26.01.89 Gazette 89/03**

(54) **BACKOFEN.**

(30) Priorität : **16.07.87 AT 1801/87**

(43) Veröffentlichungstag der Anmeldung :
**09.05.90 Patentblatt 90/19**

(45) Bekanntmachung des Hinweises auf die
Patenterteilung :
**01.04.92 Patentblatt 92/14**

(84) Benannte Vertragsstaaten :
**DE FR IT SE**

(56) Entgegenhaltungen :
**EP-A- 002 784**
**WO-A-84/01266**
**AT-B- 378 668**
**DE-U- 8 703 666**
**US-A- 4 561 348**

(73) Patentinhaber : **KÖNIG, Helmut**
**Statteggerstrasse 80**
**A-8045 Graz (AT)**

(72) Erfinder : **KÖNIG, Helmut**
**Statteggerstrasse 80**
**A-8045 Graz (AT)**

(74) Vertreter : **Brauneiss, Leo et al**
**Patentanwälte Dipl.-Ing. Leo Brauneiss,**
**Dipl.-Ing. Dr. Helmut Wildhack Landstrasser**
**Hauptstrasse 50 Postfach 281**
**A-1031 Wien (AT)**

## Beschreibung

Die Erfindung bezieht sich auf einen Backofen mit einem das Backgut aufnehmenden Backraum, durch den von einer Heizung erwärmte Luft mittels eines Gebläses hindurchgeführt wird, das zwei auf einer gemeinsamen, periodisch in unterschiedlichen Drehrichtungen angetriebenen Welle sitzende Radiallaufräder aufweist, denen die angesaugte Luft über eine axiale Anströmöffnung zugeführt wird.

Bei einem bekannten Backofen dieser Art (AT-PS 378 668) sind die beiden Radiallaufräder in die Seitenwand des Backraumes eingesetzt und auf einer horizontal gelagerten Welle angeordnet. Das eine, dem Backraum näher angeordnete Radiallaufrad schleudert einen Teil der angesaugten Luft radial ab und führt diesen Luftanteil wieder in den Backraum zurück. Das andere, vom Backraum weiter entfernte Radiallaufrad treibt die von ihm abgeschleuderte Luft zu einer Heizung und zu einer Beschwadungsvorrichtung, worauf die so erwärmte und befeuchtete Luft durch eine die beiden Radiallaufräder umgebende Ringöffnung der Backraumseitenwand wieder in den Backraum eingeführt und dem ersterwähnten Teilluftstrom beigemengt wird. Dadurch läßt sich aber nur eine Querdurchströmung des Backraumes im wesentlichen in einer einzigen Richtung erzielen, auch wenn die Drehrichtung der beiden Radiallaufräder periodisch geändert wird. Die Strömungsrichtungsumkehr im Backraum ist aber zwecks gleichmäßiger Ausbackung des Backgutes häufig gewünscht.

Eine solche Umkehr der Querdurchströmung des Backraumes mit heißer und gegebenenfalls beschwadeter Luft ist bei einer anderen bekannten Konstruktion AT-B-324988 möglich, bei welcher oberhalb oder unterhalb des Backraumes zwei Querstromgebläse angeordnet sind, deren Förderrichtungen einander entgegengesetzt sind. Jeweils das eine dieser beiden Querstromgebläse wird angetrieben, das andere läuft im Leerlauf mit. Durch periodische Umschaltung zwischen den beiden Gebläsen läßt sich ein hinsichtlich seiner Richtung wechselnder Strömungsverlauf im Backraum erzielen. Bei einem anderen bekannten Backofen AT-B-358500 ist hiezu lediglich ein einziges Gebläse vorgesehen, das immer in derselben Richtung fördert, wobei an den Druckstutzen dieses Gebläses zwei Luftzuführungskanäle angeschlossen sind, wobei ein periodisch umgeschaltetes Steuerklappensystem dafür sorgt, daß die vom Gebläse geförderte Heißluft wechselweise in die zu den beiden Backraumseiten führenden Luftzuführungskanäle einströmt. Aus dem jeweils nicht angespeisten Luftzuführungskanal wird die Luft durch das Steuerklappensystem wieder zur Saugseite des Gebläses zurückgeleitet. Dadurch läßt sich bei einem Konvektionsbackofen, bei welchem das Backgut unbeweglich angebracht ist und bewegte Warmluft die Ausbackung bewirkt, ein gleichmäßiges Ausbacken erzielen. Nachteilig an den beschriebenen bekannten Konstruktionen ist jedoch der Aufwand, der für die Klappen und ihre Steuerung erforderlich ist.

Die Erfindung setzt sich zur Aufgabe, diese Nachteile zu vermeiden und einen Backofen der eingangs geschilderten Art zu schaffen, bei welchem eine Durchströmung des Backraumes in unterschiedlicher Richtung zwecks gleichmäßiger Ausbackung des Backgutes möglich ist, ohne daß Umschaltklappen oder mehrere Querstromgebläse benötigt werden. Die Erfindung löst diese Aufgabe dadurch, daß die Schaufeln der beiden Radiallaufräder gekrümmt sind, wobei die Krümmungsrichtung der Schaufeln des einen Radiallaufrades jener des anderen Radiallaufrades entgegengesetzt ist, und daß die von den beiden Radiallaufrädern abgeschleuderten Luftströme mittels gesonderter Gehäuse zu an verschiedenen Stellen angeordneten Luftzuführungskanälen geführt sind, aus denen die Luft in unterschiedlicher Richtung in den Backraum eintritt. Auf diese Weise wird mit geringem Aufwand eine Belüftung des Backraumes ermöglicht, bei welcher die Luft intermittierend einmal in der einen Richtung, und nach der Umschaltung der Drehrichtung der gemeinsamen Welle der beiden Radiallaufräder in der anderen Richtung durch den Backraum strömt. Die Erfindung macht hiebei von dem Umstand Gebrauch, daß ein Radialgebläse mit vorwärts gekrümmten Schaufeln eine sehr hohe Energieausnutzung aufweist, soferne nur die Laufschaufelgestalt, die Drehrichtung und das Gehäuse die der Theorie entsprechende Ausbildung haben. Wird hingegen dasselbe Laufrad in die entgegengesetzte Richtung gedreht, so ist die Förderleistung sehr gering. Bei der erfindungsgemäßen Konstruktion arbeitet daher jeweils eines der beiden Radialgebläse mit hoher Förderleistung, wogegen das jeweils andere Gebläse eine gegenüber dieser Förderleistung verschwindend geringe Förderleistung hat, so daß der hohen Förderleistung des erstgenannten Gebläses nur unwesentlich entgegengewirkt wird.

Ein besonderer Vorteil der erfindungsgemäßen Konstruktion besteht darin, daß sie universell im Hinblick auf die Ofenbauart anwendbar ist. Eine besonders vorteilhafte Konstruktion weist die Luftzuführungskanäle zu beiden Seiten des Backraumes verlaufend auf, was eine Querdurchströmung des Backraumes in alternierender Richtung ergibt. Diese Bauweise ist besonders günstig für solche Backöfen, bei welchen in den Backraum ein das Backgut tragender Wagen einschiebbar ist. Eine weitere günstige Anordnung besteht im Rahmen der Erfindung darin, daß die beiden Radiallaufräder an der Decke des Backraumes, vorzugsweise in der Mitte der Decke, angeordnet sind. Dies ermöglicht es, die zumeist als kritisch empfundene Breite des Backraumes gering zu halten, eine bevorzugte Ausführungsform besteht im Rahmen der Erfindung hiebei darin, daß die Decke des Backraumes dicht abgeschlossen ist und die axiale Anströmöffnung für die beiden Radiallaufräder mit einem Ansaugkanal in Verbindung steht, der entlang einer Wand des Backraumes, vorzugsweise der Rückwand desselben, zu einer im Bodenbereich des Backraumes angeordneten Luftansaugöffnung führt. Auf diese Weise ergibt sich eine besonders gleichmäßige Horizontaldurchströmung des Backraumes, wobei die unten angeordnete Luftansaugöffnung der natürlichen Auftriebstendenz der warmen Luft entgegenwirkt, so daß sich im Backraum zumindest annähernd eine horizontale Querdurchströmung ergibt. Eine besonders zweckmäßige Anordnung besteht hiebei darin, daß die Luftzufuhr zu den beiden Radiallaufrädern über eine die Anströmöffnung bildende Anströmdüse erfolgt, in der oder in deren Nähe die Heizung angeordnet ist. Dies ergibt eine besonders wirksame Lage für die Heizung, da die Luft in bzw. in der Nähe der Anströmdüse mit hoher Geschwindigkeit über die Heizung strömt.

Um die Verwirbelung der Luft beim Durchströmen zum von der Anströmöffnung weiter entfernten Radiallaufrad und den damit hervorgerufenen negativen Einfluß auf die Förderleistung dieses weiter entfernten Radiallaufrades auszugleichen, ist es im Rahmen der Erfindung zweckmäßig, wenn das von der Anströmöffnung weiter entfernte Radiallaufrad einen größeren Durchmesser hat als das andere Radiallaufrad. Zum gleichen Zweck kann das von der Anströmöffnung weiter entfernte Radiallaufrad eine größere in Axialrichtung der Welle gemessene Breite haben als das andere Radiallaufrad.

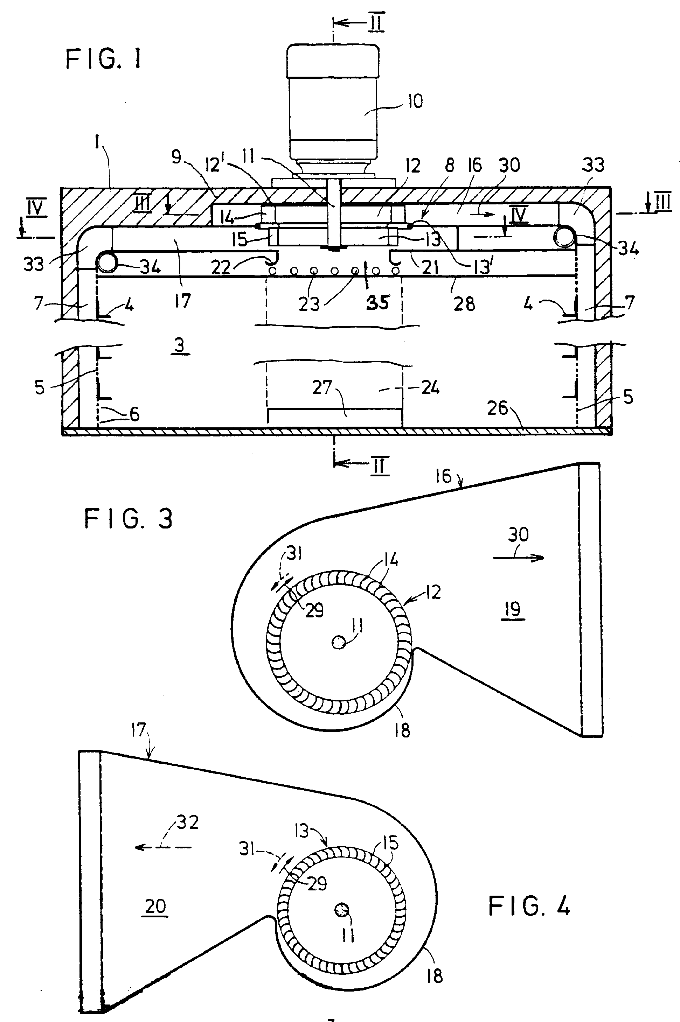

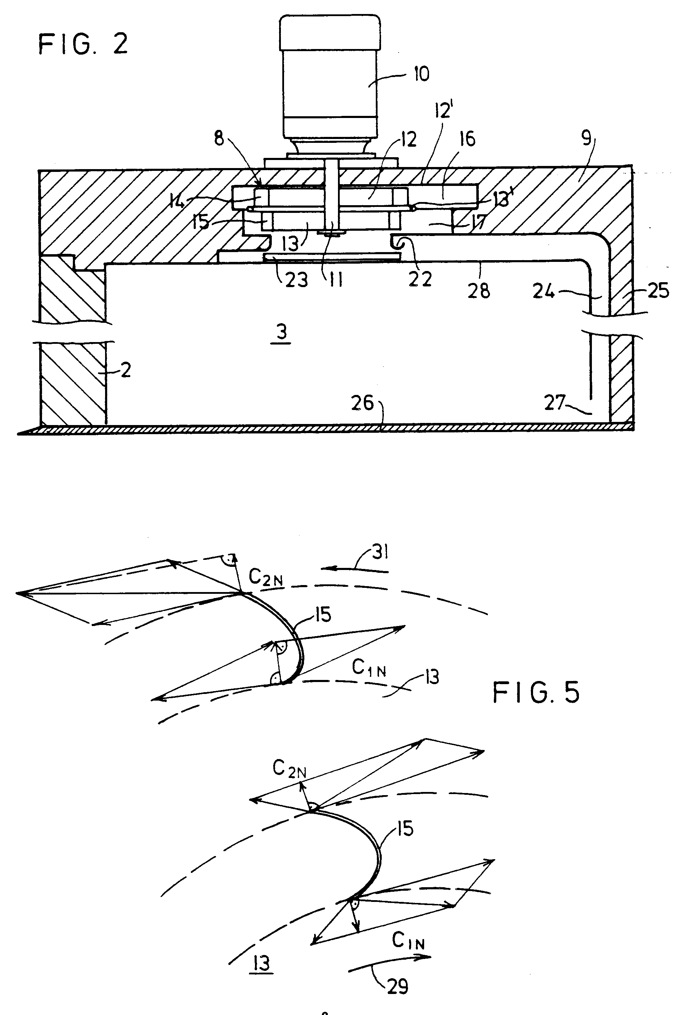

In der Zeichnung ist ein Ausführungsbeispiel der Erfindung schematisch dargestellt. Fig.1 zeigt einen Vertikalschnitt durch einen Backofen. Fig.2 ist ein Schnitt nach der Linie II-II der Fig.1. Die Fig.3 und 4 sind Schnitte durch Details der Fig.1 nach den Linien III-III bzw. IV-IV der Fig.1. Fig.5 zeigt in Diagrammform die Förderleistung an einer gekrümmten Schaufel eines Radiallaufrades bei verschiedenen Drehrichtungen.

Der Backofen nach den Fig.1 bis 4 hat ein wärmeisoliertes Gehäuse 1, das vorne eine gleichfalls wärmeisolierte Türe 2 hat, durch welche der Backraum 3 zugänglich ist. Im Backraum 3 können ortsfeste Schienen 4 angeordnet sein, auf welche die das Backgut tragenden Auflagen, z.B. Backbleche, einschiebbar sind, oder es kann in den Backraum 3 ein das Backgut auf Auflagen tragender Wagen (Stikkenwagen) einschiebbar sein. Der Backraum 3 ist seitlich von zwei Zwischenwänden 5 begrenzt, welche eine Vielzahl von Öffnungen 6, vorzugsweise in Schlitzform, für den Durchtritt der Warmluft haben. An der Außenseite der Zwischenwände 5 verlaufen vertikale Luftzuführungskanäle 7 über die gesamte Höhe des Backraumes 3 und über die gesamte Tiefe desselben. Vorzugsweise sind die Zwischenwände 5 als Stauwände ausgebildet, d.h. die in ihnen vorgesehenen Öffnungen 6 haben einen so kleinen Querschnitt, daß sich die über die Luftzuführungskanäle 7 zugeführte Warmluft vor diesen Öffnungen 6 staut, derart, daß diese Luft in Form im wesentlichen horizontal gerichteter Strahlen düsenartig in den Backraum 3 eintritt. Die Luftzufuhr zu den beiden Luftzuführungskanälen 7 erfolgt alternierend von einem Gebläse 8, das an der Deckwand 9 des Backofens angeordnet ist und von einem Elektromotor 10 mit umsteuerbarer Drehrichtung aus angetrieben wird. Die Welle 11 dieses Elektromotors 10 treibt zwei in axialer Richtung übereinander angeordnete Radiallaufräder 12,13 an, die beide mit je einem Kranz von Schaufeln 14 bzw.15 versehen sind (Fig.3,4). Die Schaufeln 14 des oberen Radiallaufrades 12 sind an ihrem oberen Ende mit einem Trägerkörper 12' verbunden, der auf die Welle 11 des Elektromotors 10 drehfest aufgesetzt ist, und tragen an ihrem unteren Ende über einen Zwischenring 13' die Schaufeln 15 des unteren Radiallaufrades 13. Diese Schaufeln 14,15 sind, in der Draufsicht gesehen (Fig.3,4), beim Radiallaufrad 12 nach der anderen Richtung gekrümmt als beim Radiallaufrad 13, für jedes Radiallaufrad 12,13 jedoch einheitlich nach derselben Richtung. Jedes der beiden Radiallaufräder 12,13 des Gebläses 8 ist in einem Gehäuse 16 bzw.17 angeordnet. Die Seitenwand 18 jedes der beiden Gehäuse 16,17 hat einen Abstand von der Welle 11 bzw.vom Außenumfang der Schaufeln 14,15, welcher sich von einem sehr geringen Wert kontinuierlich in jener Umfangsrichtung des jeweiligen Laufrades 12 bzw.13 vergrößert, in welcher die Schaufeln des jeweiligen Radiallaufrades 12 bzw.13 gekrümmt sind. Dadurch erhält jedes Gehäuse 16,17 spiralförmige Gestalt. An der Stelle des größten Abstandes setzt an die Seitenwand 18 eine trichterartige Erweiterung 19 bzw.20 an, durch welche der vom jeweiligen Gehäuse 16 bzw.17 gebildete Luftkanal im wesentlichen auf die gesamte, normal auf die Zeichenebene gemessene Tiefe des Backraumes 3 vergrößert wird. Die beiden Gehäuse 16,17 sind übereinander in entsprechenden Ausnehmungen der Deckwand 9 des Gehäuses 1 des Backofens horizontal angeordnet. An seiner Bodenwand 21 (Fig.1) hat das untere Gehäuse 17 einen Ansatz, welcher eine die Anströmöffnung 35 begrenzende Anströmdüse 22 für die zum Gebläse 8 strömende Luft bildet, welche über den vom Innenumfang der Schaufelkränze der beiden Radiallaufräder 12,13 begrenzten Raum zu den Schaufeln 14,15 strömt. Knapp vor dieser konzentrisch zur Welle 11 angeordneten Anströmdüse 22, jedenfalls in der Nähe derselben, ist die Heizung 23, z.B. in Form eines elektrischen Heizregisters oder in Form von heizgasdurchströmten Rohren, angeordnet. Zur Heizung 23 gelangt die aus dem Backraum 3 abgesaugte Luft über einen Ansaugkanal 24 (Fig.1,2), der in der Rückwand 25 des Backraumes 3 verläuft und im Bereiche des Bodens 26 des Backraumes 3 eine Luftansaugöffnung 27 hat, durch welche die Luft aus dem Backraum 3 in den Ansaugkanal 24 eintreten kann. Um unerwünschte Nebenschlüsse für diese Luftströmung zu vermeiden, ist die Deckwand 28 des Backraumes 3 zumindest im wesentlichen dicht abgeschlossen.

Im Betrieb wird die Drehrichtung der Welle 11 des Elektromotors 10 durch entsprechende Ansteuerung desselben periodisch gewechselt. In der einen Drehrichtung (in den Fig.3,4 mit voll ausgezogenen Pfeilen 29 angedeutet) ist das Radiallaufrad 12 im Sinne einer Luftförderung in Richtung des Pfeiles 30 (Fig.3) wirksam, wogegen das andere Radiallaufrad 13 im Vergleich dazu eine nur unwesentliche Förderleistung aufweist. Die vom gesamten Gebläse 8 geförderte Warmluft ist daher im wesentlichen jene des Radiallaufrades 12, sie wird in Richtung des Pfeiles 30 in den in Fig.1 rechts dargestellten Luftzuführungskanal 7 gefördert, aus welchem sie durch die Öffnungen 6 der Zwischenwand 5 in den Backraum 3 eintritt und diesen im wesentlichen horizontal durchströmt. Aus dem Backraum 3 gelangt die Luft durch die Luftansaugöffnung 27 in den Ansaugkanal 24 und von diesem über die Anströmdüse 22 zu den beiden Radiallaufrädern 12,13 zurück. Wie bereits erwähnt, ist hiebei die Förderleistung des unteren Radiallaufrades 13 unwesentlich und kann daher außer Betracht bleiben.

Nach Umsteuerung der Drehrichtung des Elektromotors 10 laufen die beiden Radiallaufräder 12,13 in Richtung der strichliert in den Fig.3,4 eingezeichneten Pfeile 31 um. Dadurch wird im wesentlichen nur das Radiallaufrad 13 wirksam, wogegen das Radiallaufrad 12 eine im Vergleich dazu nur unwesentliche Förderleistung vollbringt. Die über die Anströmdüse 22 dem Gebläse 8 zugeführte Luft wird daher im wesentlichen nur vom Radiallaufrad 13 in Richtung des Pfeiles 32 (Fig.4) in den in Fig.1 links dargestellten Luftzuführungskanal 7 gefördert, aus dem sie durch die Öffnungen 6 der Zwischenwand 5 in den Backraum 3 eintritt. Die Rückführung der Luft zum Gebläse 8 erfolgt wie vorhin beschrieben. Nach erneuter Umsteuerung der Drehrichtung des Elektromotors 10 beginnt wieder die erstgenannte Arbeitsweise und so fort. Auf diese Weise ergibt sich eine gleichmäßige Beaufschlagung des im Backraum 3 befindlichen Backgutes mit Heißluft.

Um in den Luftzuführungskanälen 7 eine möglichst laminare Strömung zu erzielen bzw. Wirbel zu vermeiden, die sich aus der Erweiterung 19 bzw.20 des Gehäuses 16 bzw.17 ergeben könnten, sind im Übergangsbereich zwischen dem Gehäuse 16 bzw.17 und dem jeweils daran angeschlossenen Luftzuführungskanal 7 parallel zueinander angeordnete, vertikal stehende Lamellen 33 angeordnet, wobei jeder Lamellensatz von einem Rohr 34 getragen wird.

Die vom oberen Radiallaufrad 12 geförderte Luft muß durch den vom Innenumfang der Schaufeln 15 des unteren Radiallaufrades 13 begrenzten Raum durchtreten. Hiebei wird diese Luft verwirbelt, was eine Beeinträchtigung der Förderleistung des oberen Radiallaufrades 12 bewirken kann. Um dies auszugleichen, hat das obere Radiallaufrad 12 einen größeren Durchmesser und bzw. oder eine größere Breite als das untere Radiallaufrad 13.

Fig.5 zeigt die Förderverhältnisse für das untere Radiallaufrad 13 in den beiden Drehrichtungen. In der dem Pfeil 31 entsprechenden Drehrichtung ist die Förderleistung maximal, denn die beiden Pfeile $C_{2N}$ für die Fördermenge am Austritt der Schaufel 15 und $C_{1N}$ für die Fördermenge am Eintritt der Schaufel 15 sind in der gleichen Richtung gerichtet. Läuft hingegen dasselbe Gebläserad in der entgegengesetzten Richtung (Pfeil 29), so sind die beiden Pfeile $C_{2N}$ und $C_{1n}$ einander entgegengerichtet und das Gebläserad erzeugt vorwiegend Wirbel, hat jedoch praktisch keine effektive Förderwirkung.

**Patentansprüche**

1. Backofen mit einem das Backgut aufnehmenden Backraum (3), durch den von einer Heizung erwärmte Luft mittels eines Gebläses (8) hindurchgeleitet wird, das zwei auf einer gemeinsamen, periodisch in unterschiedlichen Drehrichtungen angetriebenen Welle (11) sitzende Radiallaufräder (12,13) aufweist, denen die angesaugte Luft über eine axiale Anströmöffnung (35) zugeführt wird, dadurch gekennzeichnet, daß die Schaufeln (14,15) der beiden Radiallaufräder (12,13) gekrümmt sind, wobei die Krümmungsrichtung der Schaufeln (14) des einen Radiallaufrades (12) jener des anderen Radiallaufrades (13) entgegengesetzt ist, und daß die von den beiden Radiallaufrädern (12,13) abgeschleuderten Luftströme mittels gesonderter Gehäuse (16,17) zu an verschiedenen Stellen angeordneten Luftzuführungskanälen (7) geführt sind, aus denen die Luft in unterschiedlicher Richtung in den Backraum (3) eintritt.

2. Backofen nach Anspruch 1, dadurch gekennzeichnet, daß die beiden Radiallaufräder (12,13) an der Deckwand (9) des Gehäuses (1) des Backofens, vorzugsweise in der Mitte dieser Deckwand, angeordnet sind.

3. Backofen nach den Ansprüchen 1 und 2, dadurch gekennzeichnet, daß unterhalb der beiden Radiallaufräder (12,13) eine den Backraum (3) dicht abschließende Deckwand (28) desselben liegt und daß die axiale Anströmöffnung (35) für die beiden Radiallaufräder (12,13) mit einem Ansaugkanal (24) in Verbindung steht, der entlang einer Wand des Backraumes (3), varzugsweise der Rückwand (25) desselben, zu einer im Bereich des Bodens (26) des Backraumes (3) angeordneten Luftansaugöffnung (27) führt.

4. Backofen nach einem der Ansprüche 1 bis 3, dadurch gekennzeichnet, daß die Luftzufuhr zu den beiden Radiallaufrädern (12,13) über eine die Anströmöffnung bildende Anströmdüse (22) erfolgt, in der oder in deren Nähe die Heizung (23) angeordnet ist.

5. Backofen nach einem der Ansprüche 1 bis 4, dadurch gekennzeichnet, daß die beiden Gehäuse (16,17) der beiden Radiallaufräder (12,13) Seitenwände (18) haben, deren Abstand von der gemeinsamen Welle (11) der beiden Radiallaufräder (12,13) sich kontinuierlich vergrößert, wobei diese Vergrößerung in jener Richtung verläuft, in welcher die Schaufeln (14,15) des jeweiligen Radiallaufrades (12,13) gekrümmt sind.

6. Backofen nach einem der Ansprüche 1 bis 5, dadurch gekennzeichnet, daß das von der Anströmöffnung (22) weiter entfernte Radiallaufrad (12) einen größeren Durchmesser und bzw.oder eine größere, in Axialrichtung der Welle (11) gemessene Breite hat als das andere Radiallaufrad (13).

7. Backofen nach einem der Ansprüche 1 bis 6, dadurch gekennzeichnet, daß die Luftzuführungskanäle (7) zu beiden Seiten des Backraumes (3) verlaufen.

## Claims

1. Oven having a baking chamber (3) for receiving baking material, through which air, heated by a heating device, is conveyed by means of a fan (8), the fan having two radial impellers (12, 13) located on a common shaft (11) periodically driven in different directions of rotation, to which fan the air which is sucked in is fed via an axial flow aperture (35), characterised in that the blades (14, 15) of the two radial impellers (12, 13) are curved, the direction of curve of the blades (14) of one radial impeller (12) being opposite to that of the other radial impeller (13), and in that the air currents centrifuged by the two radial impellers (12, 13) are guided by means of a separate housing (16, 17) to air supply ducts (7) arranged at different points, from which ducts the air enters the baking chamber (3) in a different direction.

2. Oven according to claim 1, characterised in that the two radial impellers (12, 13) are arranged on the covering wall (9) of the housing (1) of the oven, preferably in the middle of this covering wall.

3. Oven according to claims 1 and 2, characterised in that below the two radial impellers (12, 13) is a covering wall (28) of the baking chamber (3) tightly sealing said chamber and in that the axial flow aperture (35) for the two radial impellers (12, 13) is in communication with an inlet duct (24) which leads along a wall of the baking chamber (3), preferably the rear wall (25) of the same, to an air inlet aperture (27) disposed in the region of the bottom (26) of the baking chamber (3).

4. Oven according to one of claims 1 to 3, characterised in that the supply of air to the two radial impellers (12, 13) is effected by means of a flow nozzle (22), forming the flow aperture, in which or near which nozzle the heating device (23) is disposed.

5. Oven according to one of claims 1 to 4, characterised in that the two housings (16, 17) of the two radial impellers (12, 13) have side walls (18) whose spacing from the common shaft (11) of the two radial impellers (12, 13) continuously increases, this increase extending in the direction in which the blades (14, 15) of the respective radial impeller (12, 13) are curved.

6. Oven according to one of claims 1 to 5, characterised in that the radial impeller (12) further removed from the flow aperture (22) has a larger diameter and/or a greater width, measured in the axial direction of the shaft (11), than the other radial impeller (13).

7. Oven according to one of claims 1 to 6, characterised in that the air supply ducts (7) extend on both sides of the baking chamber (23).

## Revendications

1. Four avec une chambre (3) recevant le produit à cuire à travers laquelle est conduite, par une soufflerie (8), l'air réchauffé par un chauffage, soufflerie qui présente deux roues radiales (12,13) fixées sur un arbre (11) commun entraîné périodiquement dans des sens de direction différents, auxquelles est acheminé l'air aspiré par une ouverture axiale (35), caractérisé en ce que les aubes (14,15) des deux roues radiales (12,13) sont courbes, le sens de courbure des aubes (14) d'une roue radiale (12) étant opposé à celui de l'autre roue radiale (13) et caractérisé en ce que l'air projeté par les deux roues radiales (12,13) est acheminé grâce à des carters spéciaux (16,17) vers des canalisations d'air (7) disposées à différents emplacements, à partir desquelles l'air pénètre dans une direction variable dans la chambre (3).

2. Four selon revendication 1, caractérisé en ce que les deux roues radiales (12,13) sont disposées sur la voûte (9) de la carcasse (1) du four, de préférence au milieu de la voûte.

3. Four, selon revendications 1 et 2, caractérisé en ce que sous les deux roues radiales (12,13) se trouve la voûte (28) de celui-ci, fermant la chambre (3) d'une façon étanche et que l'ouverture axiale (35) pour les deux roues radiales (12,13) est en communication avec une canalisation d'aspiration (24) qui le long d'une paroi de la chambre (3) de préférence de la paroi du fond de celui-ci, débouche dans une ouverture d'aspiration d'air (27) disposée dans la zone de la sole (26) de la chambre (3).

4. Four selon l'une des revendications 1 à 3 caractérisé en ce que l'arrivée d'air sur les deux roues radiales (12,13) se fait par une buse (22) formant l'ouverture, dans laquelle, ou à proximité de laquelle est disposé le chauffage (23).

5. Four selon l'une des revendications 1 à 4, caractérisé en ce que les deux carters (16,17) des deux roues radiales (12,13) ont des piédroits (18), dont la distance de l'arbre commun (11) des deux roues radiales (12,13) va en augmentant progressivement, cette augmentation se faisant dans la direction, dans laquelle les aubes (14,15) de chacune des roues radiales (12,13) sont courbées.

6. Four selon l'une des revendications 1 à 5, caractérisé en ce que la roue radiale (12), la plus éloignée de l'ouverture (22) a un diamètre plus grand et/ou une largeur mesurée dans le sens axial de l'arbre (11) plus grande que l'autre roue radiale (13).

7. Four, selon l'une des revendications 1 à 6, caractérisé en ce que les canalisations d'air (7) sont disposées des deux côtés de la chambre (3).

FIG. 1

FIG. 3

FIG. 4

FIG. 2

FIG. 5